# EUROPÄISCHE PATENTANMELDUNG

(11) **EP 1 342 964 A2**
(43) Veröffentlichungstag der Anmeldung: **10.09.2003**
(21) Anmeldenummer: 03450033.0
(22) Anmeldetag: 31.01.2003
(51) Int. Cl.: F24J 2/50, F24J 2/26, F24J 2/52

(54) **Sonnenkollektor**

(30) Priorität: 06.03.2002 AT 3472002
(71) Anmelder: Söllinger, Johann, 4881 (AT)
(72) Erfinder: Söllinger, Johann, 4881 (AT)
(74) Vertreter: Hübscher, Heiner, Dipl.-Ing.

(57) **Zusammenfassung**

Es wird ein Sonnenkollektor mit einem eine evakuierbare Kammer (5) bildenden Gehäuse (1) beschrieben, das zwischen einem Boden (2) und einer für Wärmestrahlung durchlässigen Abdeckscheibe (3) einen Absorber (6) aufnimmt, der über Abstandhalter aus einem wärmedämmenden Werkstoff sowohl gegenüber dem Boden (2) als auch gegenüber der Abdeckscheibe (3) abgestützt ist. Um einfache Konstruktionsverhältnisse zu schaffen, wird vorgeschlagen, daß die Abstandhalter aus auf dem Absorber (6), dem Boden (2) und der Abdeckscheibe (3) abwälzbaren Rollkörpern (8) bestehen, wobei die Achsen der zueinander parallelen Rollkörper (8) auf der einen Absorberseite quer zu den Achsen der ebenfalls zueinander parallelen Rollkörper (8) auf der gegenüberliegenden Absorberseite verlaufen.

## Beschreibung

Die Erfindung bezieht sich auf einen Sonnenkollektor mit einem eine evakuierbare Kammer bildenden Gehäuse, das zwischen einem Boden und einer für Wärmestrahlung durchlässigen Abdeckscheibe einen Absorber aufnimmt, der über Abstandhalter aus einem wärmedämmenden Werkstoff sowohl gegenüber dem Boden als auch gegenüber der Abdeckscheibe abgestützt ist.

Um Wärmeverluste zu vermeiden, kann der Absorber von Sonnenkollektoren in einer evakuierbaren Kammer zwischen einem Boden und einer für Wärmestrahlung durchlässigen Abdeckscheibe eines Kollektorgehäuses angeordnet werden. Boden und Abdeckscheibe müssen dabei gegeneinander abgestützt werden, um ein Eindrücken der evakuierten Kammer und insbesondere ein Brechen der Abdeckscheibe zu verhindern. Zu diesem Zweck können über die Fläche der Abdeckscheibe verteilte Abstandhalter zwischen Boden und Abdeckscheibe des Gehäuses vorgesehen werden, was jedoch den Nachteil mit sich bringt, daß diese Abstandhalter den Absorber durchsetzen. Zur Vermeidung dieses Nachteils wurde bereits vorgeschlagen (DE 3 101 298 A1), zwischen dem Boden und dem Absorber einerseits sowie zwischen dem Absorber und der Abdeckscheibe anderseits gesonderte Abstandhalter vorzusehen, die jeweils auf Traggittern befestigt sind. Die Wärmeleitung zwischen Absorber einerseits und Abdeckscheibe bzw. Boden anderseits über die Abstandhalter soll durch einen wärmedämmenden Werkstoff für die Abstandhalter möglichst klein gehalten werden. Nachteilig bei diesen bekannten Sonnenkollektoren mit einer evakuierbaren Kammer zur Aufnahme des Absorbers ist allerdings, daß aufgrund der Druckbelastung des Gehäuses der Reibschluß zwischen den Abstandhaltern und der Abdeckscheibe bzw. dem Boden kaum eine Verlagerung der Abstandhalter gegenüber dem Absorber, dem Boden oder der Abdeckscheibe zuläßt. Wegen des im Vergleich zur Abdeckscheibe bzw. zum Boden unterschiedlichen Wärmedehnungsverhaltens des Absorbers bedeutet dies eine einschneidende Begrenzung der einzelnen Kollektorfläche.

Der Erfindung liegt somit die Aufgabe zugrunde, einen Sonnenkollektor der eingangs geschilderten Art so zu verbessern, daß auch großflächigere Absorber eingesetzt werden können, die eine wirtschaftliche Ausnutzung der Sonnenenergie mit einem vergleichsweise hohen Wirkungsgrad erlauben.

Die Erfindung löst die gestellte Aufgabe dadurch, daß die Abstandhalter aus auf dem Absorber, dem Boden und der Abdeckscheibe abwälzbaren Rollkörpern bestehen, wobei die Achsen der zueinander parallelen Rollkörper auf der einen Absorberseite quer zu den Achsen der ebenfalls zueinander parallelen Rollkörper auf der gegenüberliegenden Absorberseite verlaufen.

Durch die Ausbildung der Abstandhalter als Rollkörper wird in einfacher Weise eine gegenseitige Verlagerung zwischen Absorber und Boden bzw. Abdeckscheibe des Gehäuses ermöglicht, weil sich ja die Rollkörper auf dem Absorber bzw. dem Boden und der Abdeckscheibe abwälzen können. Mit der sich kreuzenden Ausrichtung der zueinander parallelen Rollkörper auf den einander gegenüberliegenden Absorberseiten wird nicht nur ein Längenausgleich in zwei Richtungen erleichtert, sondern auch eine Biegebeanspruchung des Absorbers zwischen den auf gegenüberliegenden Absorberseiten angreifenden Rollkörpern vermieden. Dazu kommt, daß durch die Rollkörper die Wärmeübertragungsfläche zwischen den Abstandhaltern und den anliegenden Konstruktionsteilen klein ausfällt, so daß sich in besonders vorteilhafter Weise Wärmebrücken vermeiden lassen, obwohl großflächige Absorberflächen zum Einsatz kommen können, und zwar bei einem vergleichsweise geringen Konstruktionsaufwand, weil der auf das Gehäuse mit der evakuierten Kammer einwirkende äußere Luftdruck eine sichere Lagerung der Rollkörper sorgt.

Um den Wirkungsgrad des Sonnenkollektors zu steigern, kann zwischen dem Absorber und dem Boden eine über Rollkörper abgestützte Reflektorplatte vorgesehen werden, wobei die Achsen der zueinander parallelen Rollkörper zwischen Absorber und Reflektorplatte quer zu den Achsen der zueinander parallelen Rollkörper zwischen Reflektorplatte und Boden verlaufen, um durch eine solche Rollkörperanordnung die bereits geschilderten Vorteile hinsichtlich der Verlagerung und Abstützung der Reflektorplatte gegenüber dem Gehäuse bzw. dem Absorber ausnützen zu können. Durch die Reflektorplatte wird die vom Absorber abgestrahlte Wärme zum Absorber rückreflektiert wodurch eine Erwärmung des Bodens des Gehäuses und die damit verbundenen Wärmeverluste vermieden werden.

Da die einen Wärmeträger führenden Leitungsrohre des Absorbers im allgemeinen parallel verlaufen und aus der Absorberfläche herausragen, ist hinsichtlich der Anordnung der Rollkörper als Abstandhalter auf den Verlauf der Rohrleitungen Rücksicht zu nehmen. Zu diesem Zweck können die Rollkörper zwischen Abdeckscheibe und Absorber sowie zwischen Reflektorplatte und Boden aus Rundstäben, die Rollkörper zwischen Absorber und Reflektorplatte jedoch aus gruppenweise axial hintereinandergereihten Walzen bestehen, die im Bereich der Rundstäbe vorgesehen und gruppenweise auf einer gemeinsamen Achse gelagert sind. Die Rundstäbe können somit zwischen den parallelen Leitungsrohren des Absorbers angeordnet werden, während die Walzen zwischen Absorber und Reflektorplatte hinsichtlich ihrer axialen Erstreckung auf den Bereich der Rundstäbe beschränkt werden und nicht über die Leitungsrohre durchgehen. Damit trotz der auf Zwischenbereiche zwischen den Leitungsrohren des Absorbers begrenzten Walzen diese in einer vorgegebenen Ordnung ausgerichtet werden können, sind die Walzen gruppenweise auf einer gemeinsamen Achse gelagert.

Besteht der Absorber aus einer Absorberplatte mit in Sicken eingelöteten Leitungsrohren, so werden diese Leitungsrohre üblicherweise auf der der Abdeckscheibe zugekehrten Absorberseite angeordnet. Dies ergibt allerdings Schwierigkeiten, wenn die Absorberplatte mit einer die Wärmeaufnahme unterstützenden Deckschicht versehen werden soll. Aus diesem Grunde empfiehlt es sich, die in Sicken eingelöteten Leitungsrohre auf der von der Abdeckscheibe abgekehrten Seite der Absorberplatte vorzusehen.

Damit die Abdeckscheibe und der Boden des die evakuierbare Kammer bildenden Gehäuses beispielsweise über einen Rahmen einfach gasdicht miteinander verbunden werden können, sollte der Boden und die Abdeckscheibe ein gleiches Wärmedehnungsverhalten aufweisen. Durch die erfindungsgemäβe Abstützung von Boden und Abdeckscheibe über einander kreuzende Rollkörper wird es möglich, Boden und Abdeckscheibe aus gleichem Werkstoff herzustellen, ohne Überlastungen des Gehäuses befürchten zu müssen.

In der Zeichnung ist der Erfindungsgegenstand beispielsweise dargestellt. Es zeigen
Fig. 1 einen erfindungsgemäßen Sonnenkollektor ausschnittsweise in einem schematischen Querschnitt und
Fig. 2 diesen Sonnenkollektor in einem Schnitt nach der Linie ll-ll der Fig. 1.

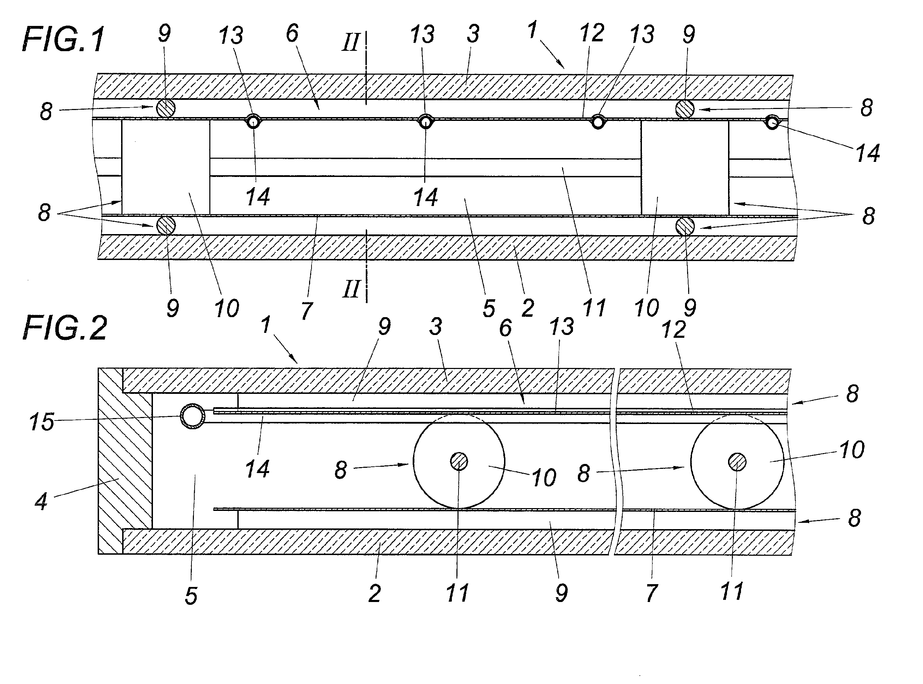

Der Sonnenkollektor nach dem dargestellten Ausführungsbeispiel weist ein Gehäuse 1 mit einem Boden 2 und einer Abdeckscheibe 3 auf, wobei die Abdeckscheibe 3 mit dem Boden 2, der wie die Abdeckscheibe 3 aus einer Glastafel besteht, miteinander über einen umfangseitigen Rahmen 4 gasdicht verbunden sind, so daß sich zwischen Boden 2 und Abdeckscheibe 3 eine evakuierbare Kammer 5 ergibt. Auf der Seite der Abdeckscheibe 3 nimmt die Kammer 5 einen Absorber 6 und zwischen dem Absorber 6 und dem Boden 2 eine Reflektorplatte 7 auf. Die Abstützung des Absorbers 6 und der Reflektorplatte 7 gegenüber dem Gehäuse 1 sowie zwischen dem Absorber 6 und der Reflektorplatte 7 erfolgt über Abstandhalter in Form von Rollkörpern 8 aus einem wärmedämmenden Werkstoff, vorzugsweise aus Glas oder Keramik. Die Anordnung ist dabei so getroffen, daß die Rollkörper 8 zwischen Abdeckscheibe 3 und Absorber 6 sowie zwischen Reflektorplatte 7 und Boden 2 aus zueinander parallelen Rundstäben 9 bestehen, während die Rollkörper 8 zwischen Absorber 6 und Reflektorplatte 7 durch Walzen 10 gebildet werden, die gruppenweise auf gemeinsamen Achsen 11 gelagert sind, die quer zu den Achsen der Rundstäbe 9 verlaufen. Während die Rundstäbe 9 im wesentlichen über die Absorberlänge in Richtung der Rundstäbe 9 durchgehen, sind die Walzen 10 in ihrer axialen Länge auf die Bereiche der Rundstäbe 9 begrenzt, wie dies insbesondere der Fig. 1 entnommen werden kann.

Der Absorber 6 weist eine Absorberplatte 12 mit parallelen Sicken 13 auf, in die Leitungsrohre 14 für einen Wärmeträger eingelötet sind. Diese Leitungsrohre 14 sind zwischen einem Verteilerrohr 15 und einem nicht dargestellten Sammelrohr am anderen Ende der Leitungsrohre 14 parallel geschaltet, um den über das Verteilerrohr 15 zuströmenden Wärmeträger im Bereich des Absorbers 6 zu erwärmen und über das Sammelrohr erwärmt abzuführen. Wie sich aus der Fig. 1 entnehmen läßt, sind die Rundstäbe 9 zwischen der Abdeckscheibe 3 und dem Absorber 6 jeweils zwischen zwei Leitungsrohren 14 parallel zu diesen angeordnet so daß die Abstützung zwischen Boden 2 und Abdeckscheibe 3 über die Rollkörper 8 durch die Leitungsrohre 14 nicht beeinträchtigt wird. Die Walzen 10 liegen ja auch im Zwischenbereich zwischen den Leitungsrohren 14 im Bereich der Rundstäbe 9.

Damit der Wärmeübergang der die Abdeckscheibe 3 durchdringenden Wärmestrahlung auf den Absorber 6 unterstützt wird, weist die Absorberplatte 12 eine die Wärmestrahlung aufnehmende Schicht auf. Diese Deckschicht würde auf der Seite der Leitungsrohre 14 durch diese beeinträchtigt werden. Aus diesem Grunde sind die Leitungsrohre 14 auf der von der Abdeckscheibe 3 abgekehrten Absorberseite angeordnet, so daß die auf der der Abdeckscheibe 3 zugekehrten Seite der Absorberplatte 12 vorgesehene Deckschicht durch die Leitungsrohre 14 nicht behindert werden kann. Die Wärmeabstrahlung des Absorbers 6 gegen den Boden 2 hin wird durch die Reflektorplatte 7 reflektiert, so daß Wärmeverluste über den Boden 2 des Gehäuses 1 weitgehend unterbunden werden, zumal die Wärmeleitung über die Rollkörper 8 aufgrund der Wahl des Werkstoffes für die Rollkörper 8 sowie der vergleichsweise kleinen Wärmeübertragungsflächen kaum ins Gewicht fällt. Trotz dieser Vermeidung von Wärmebrücken bleibt die gute Abstützung zwischen dem Boden 2 und der Abdeckscheibe 3 des Gehäuses 1 erhalten, ohne den notwendigen Längenausgleich zufolge unterschiedlicher Wärmedehnungen nachhaltig zu behindern.

## Patentansprüche

1. Sonnenkollektor mit einem eine evakuierbare Kammer bildenden Gehäuse, das zwischen einem Boden und einer für Wärmestrahlung durchlässigen Abdeckscheibe einen Absorber aufnimmt, der über Abstandhalter aus einem wärmedämmenden Werkstoff sowohl gegenüber dem Boden als auch gegenüber der Abdeckscheibe abgestützt ist, **dadurch gekennzeichnet, daß** die Abstandhalter aus auf dem Absorber (6), dem Boden (2) und der Abdeckscheibe (3) abwälzbaren Rollkörpern (8) bestehen, wobei die Achsen der zueinander parallelen Rollkörper (8) auf der einen Absorberseite quer zu den Achsen der ebenfalls zueinander parallelen Rollkörper (8) auf der gegenüberliegenden Absorberseite verlaufen.

2. Sonnenkollektor nach Anspruch 1, **dadurch gekennzeichnet, daß** zwischen dem Absorber (6) und dem Boden (2) eine über Rollkörper (8) abgestützte Reflektorplatte (7) vorgesehen ist, wobei die Achsen der zueinander parallelen Rollkörper (8) zwischen Absorber (6) und Reflektorplatte (7) quer zu den Achsen der zueinander parallelen Rollkörper (8) zwischen Reflektorplatte (7) und Boden (2) verlaufen.

3. Sonnenkollektor nach Anspruch 1 oder 2, **dadurch gekennzeichnet, daß** die Rollkörper (8) zwischen Abdeckscheibe (3) und Absorber (6) sowie zwischen Reflektorplatte (7) und Boden (2) aus Rundstäben (9), die Rollkörper (8) zwischen Absorber (6) und Reflektorplatte (7) jedoch aus gruppenweise axial hintereinandergereihten Walzen (10) bestehen, die im Bereich der Rundstäbe (9) vorgesehen und gruppenweise auf einer gemeinsamen Achse (11) gelagert sind

4. Sonnenkollektor nach einem der Ansprüche 1 bis 3, **dadurch gekennzeichnet, daß** der Boden (2) und die Abdeckscheibe (3) aus gleichem Werkstoff bestehen.

5. Sonnenkollektor nach einem der Ansprüche 1 bis 4, **dadurch gekennzeichnet, daß** der Absorber (6) in an sich bekannter Weise aus einer Absorberplatte (12) mit in Sicken (13) eingelöteten Leitungsrohren (14) besteht, die auf der von der Abdeckscheibe (3) abgekehrten Seite der Absorberplatte (12) vorgesehen sind.
